# EUROPEAN PATENT SPECIFICATION

(11) **EP 3 936 388 B1**
(45) Date of publication and mention of the grant of the patent: **04.05.2022**
(21) Application number: 20189771.7
(22) Date of filing: 06.08.2020
(51) Int. Cl.: B60R 9/06, B60R 9/10

(54) **REAR LOAD CARRIER**
HECKLASTTRÄGER
SUPPORT DE CHARGE ARRIÈRE

(30) Priority: 10.07.2020 CN 202010662935
(43) Date of publication of application: 12.01.2022
(73) Proprietor: Carman Enterprise Co., Ltd., Yuhang District Hangzhou Zhejiang 311121 (CN)
(72) Inventor: XIANWEI, Li, Hangzhou (CN); JUNQIANG, Wang, Hangzhou (CN)
(74) Representative: Paul & Albrecht Patentanwälte PartG mbB

(56) References cited:
- EP-A2- 2 460 692
- WO-A1-2014/209207
- DE-U1-202008 013 542
- DE-U1-202019 103 944
- US-A1- 2014 103 618

## Description

The present invention relates to a rear load carrier for mounting to a vehicle with a base body, which defines a longitudinal direction between its front side and its rear side and a transverse direction, a connecting device for attachment to a vehicle-side trailer coupling provided at the front side of the base body, two holding elements provided on the rear end region of the base body and arranged on transversely opposite sides thereof, two rear light units, each of which is held at one of the holding elements and each of which can be pivoted about a pivot axis between a use position, in which the rear light units are folded out and project in the transverse direction from the base body, and a transport position, in which the rear light units are folded in behind the base body, wherein the pivot axes of the rear light units extend upright with respect to and in particular vertically to a plane defined by the longitudinal direction and the transverse direction, wherein a locking mechanism is assigned to each rear light unit and is designed to lock the rear light unit in its transport position and in its use position.

Load carriers for fastening to the rear end of a vehicle, in particular a motor vehicle such as a car, are often used for transporting bicycles and/or additional luggage exceeding the capacity of the luggage compartment of the car. Generally, this type of load carrier comprises a connecting device at its front end region which is normally designed so that the load carrier can be fastened to the ball of a conventional trailer coupling. Furthermore, such load carriers for transporting bicycles comprise a base body to which profile rails for receiving the wheels of bicycles are fastened. These profile rails are normally arranged transversely to direction of travel and substantially horizontally, and comprise fastening means for fixing the bicycles to the profile rail.

Other load carriers exist as luggage carriers, wherein the base body carries a luggage box, in which luggage, for example suitcases, can be stored.

Such load carriers must be, when not in use and disconnected from the trailer coupling, stored in a space-saving way. For this purpose, components of load carriers protruding from the base body can often be moved between a use position and a transport position. For example, profile rails for receiving the wheels of a bicycle can be moved from a use position, in which they project transversely from the base body, into a transport position, in which they are positioned inside of an interior space defined by the base body and do not protrude transversely from the base body. Other components that are commonly movable between such a use position and a transport positon are for example rear light units, which are necessary to indicate the rear end of the rear load carrier under poor lighting conditions.

A rear load carrier of the type mentioned above is known from DE 10 2015 208 797 A1. It comprises a base body, which has at its front side in a longitudinal direction a connecting device for attachment to a vehicle-side trailer coupling. This rear load carrier is designed as a bike carrier and comprises two pairs of profile rails. These are arranged on laterally opposite sides of the base body, wherein the profile rails are position offset to one another in the longitudinal direction. Each pair of profile rails is pivotable about a respective pivot axis extending in the longitudinal direction between a use position, in which they protrude laterally from the base body, and a transport position, in which they are positioned in an interior space of the base body. At the profile rails positioned at the rear side, rear light units are fixed which means that they are also pivoted about a pivot axis extending in the longitudinal direction between a use position and a transport position.

Further load carriers are disclosed in US 2014/01036181 A1, WO 2014/209207 A1, DE 20 2008 013 542 U1 and EP 2 460 692 A2. The document WO 2014/209207 A1 discloses a load carrier according to the preamble of claim 1.

Even if such load carriers have proven its worth in principle, it is sometimes considered as disadvantageous that the kinematics are relatively complicated.

Therefore, it is an object of the present invention to provide an alternative load carrier, which, in particular, has a simple kinematics, avoids the disadvantages of the pre-known load carriers and allows an easy and safe handling.

This object is solved by a load carrier of the type mentioned above in that the locking mechanism comprises an engagement element which is displaceable along the pivot axis of the respective rear light unit between a release position, in which the rear light units are freely pivotable, and a locking position, in which the rear light units are locked relative to the base body.

The invention is based on the consideration to arrange the pivot axes of the rear light units such that they extend in an at least substantially vertical direction. In this way, the rear light units remain on the same level when they are pivoted between the transport position and the use position. Accordingly, the operator does not have to work against the gravity force acting on the rear light units. Preferably, the pivot axes extend vertically to the longitudinal direction and vertically to the transverse direction of the rear load carrier.

Furthermore, it is not necessary to provide a long free section of exposed supply means, for example cables, for supplying the rear light units with energy. In other words, long exposed cable sections can be avoided as the cable remains nearly completely at the same place and does not need to be extended.

According to the invention, it is provided that a locking mechanism is assigned to each rear light unit, said locking mechanism being designed to lock the rear light unit in its transport position and in its use position. By locking the rear light unit in its transport position and in its use position, the rear light units are safely positioned and operating errors can be avoided.

The locking mechanism comprises an engagement element which is displaceable along the pivot axis of the respective rear light unit between a release position, in which the rear light units are freely pivotable, and a locking position, in which the rear light units are locked relative to the base body. This embodiment is based on the consideration to provide an engagement element that, in one position, locks the rear light units relative to the base body, in particular relative to the corresponding holding element, and, in a second position, releases the rear light unit so that it can be pivoted freely by the operator.

Preferably, bearing means are provided for pivotably bearing the rear light units. The bearing of the rear light units at the holding elements may be formed as a sliding bearing. Such a sliding bearing allows an easy design with only a few components, wherein a small resistance by friction is ensured when the rear light units are pivoted.

According to a further embodiment of the invention, the holding elements have a C-shaped basic shape, wherein the respective rear light unit is pivotably arranged between the C-legs. By means of such a C-shaped design of the holding elements, the rear light units can be gripped from both sides, in particular from an upper and a lower side in order to allow an easy and safe bearing and a stable fixation at the holding elements. Preferably, the connecting webs of the holding elements face to each other. Accordingly, the C-shaped holding elements are transversely open to opposite directions. Preferably, the C-legs are directed obliquely backwards and transversely outwards.

In concrete terms, the bearing means may comprise hinge pins which engage in corresponding bearing bores. Basically, these hinge pins can be provided at the rear lights units extending into corresponding bearing bores of the holding elements, in particular in their C-legs. Principally, it is also conceivable that the hinge pins are provided and fixed to the holding elements, in particular their C-legs and extend into the rear light units.

According to a preferred embodiment, the hinge pins are designed as screws. In this way, an easy manufacturing and assembly of the rear load carrier is possible.

The rear light units may each have a basic body, in particular a one-piece basic body. A basic body forming the outer contour of the rear lights units allows a robust design and protects the electric components inside against mechanical influences, water and dust. By means of a one-piece basic body, a leak-proof design is ensured and the risk of unintended intrusions is minimized.

The basic body of the rear light units may each carry two projections which protrude between the C-legs of the holding elements. Such protrusions allow a weight-effective design of the rear light units and lead to a free space between these projections, which facilitates the assembly of the rear load carrier.

In a further elaboration of this embodiment, the bearing means comprise two hinge pins which are oriented coaxially to one another, are each arranged at one of the projections and engage in corresponding bearing bores in the C-legs of the holding elements. In other words, each rear light unit may have two bearing areas, namely an upper bearing area and a lower bearing area. In the upper bearing area, a hinge pin protrudes upwardly from this projection and engages into a bearing bore in the upper C-leg of the corresponding holding element. In the lower bearing area, a hinge pin protrudes from the bottom projection and engages downwardly into a corresponding bearing bore in the lower C-leg of the holding element. In this way, a two-point-bearing is realized and, due to the free space between the projections, an easy accessibility is given as well as the assembly is facilitated.

Preferably, the use position and the transport position of the rear light units are offset relative to one another by a pivoting angle of at least 160°, in particular of at least 170°, preferably of 180°.

In a further elaboration of this embodiment, the engagement element is coupled in a rotationally fixed manner to the respective rear light unit. Accordingly, the engagement element cannot rotate relative to the rear light unit. In order to realize the rotationally fixed coupling of the engagement element relative to the respective rear light unit, at least one guiding recess, in particular a plurality of guiding recesses may be formed in the engagement element. These guiding recesses may extend from one end surface, in particular a bottom end surface, of the engagement element into the latter, which means that the guiding recesses are open towards one end face of the engagement element. In particular, the engagement element may comprise in total three guiding recesses distributed uniformly over the circumference of an inner surface of the engagement element, in particular to a central opening. These guiding recesses are preferably in engagement with corresponding guiding protrusions formed in the rear light unit.

The engagement element may be arranged in a recess of the respective rear light unit, said recess being open towards the corresponding holding element. Accordingly, the engagement element is provided in the rear light unit. Preferably, the holding elements have a C-shaped basic shape with outwardly pointing C-legs and the recess is open towards and upper C-leg of the holding element. By arranging the engagement element in a recess open towards an upper C-leg, the locking mechanism is preferably arranged in an area of the rear load carrier upwardly open and, therefore, is easily accessible for the operator from above.

Furthermore, a guide groove open towards the corresponding holding element and extending in an annular manner around the pivot axis may be formed in the recess, in which guide groove a corresponding guide projection of the engagement element engages. An annular projection engaging into a corresponding guide groove presents a simple and effective way to guide the engagement element in the corresponding rear light unit and minimizes the risk of canting.

In an end face directed towards the corresponding holding element, the engagement element may have an engagement contour which is or can be brought into positive engagement with a corresponding counter-contour on the holding element in its locking position. Accordingly, a form-fit connection between a contour formed at the engagement element and a corresponding counter-contour formed in the corresponding holding element, in particular in a C-leg, preferable in an upper C-leg of the holding element may be used to lock the rear light unit in its transport position and in its use position.

In concrete terms, the engagement contour may comprise two engagement grooves which extend rectilinearly and radially to the pivot axis and, in particular, lie opposite to one another with respect to the pivot axis. The engagement grooves may have a rectangular cross-section and may have a radially outwardly from the pivot axis increasing groove depth, in particular a linearly increasing groove depth. The corresponding counter-contour formed on the holding element preferably has a shape complementary to the engagement contour. Such engagement grooves are easy to manufacture and allow a safe and reliable engagement and, thus, locking with a corresponding counter-contour. By means of a linearly increasing groove depth, the engagement element is furthermore centered with regard to the holding element when a corresponding counter-contour having protrusions with an increasing height is formed at the holding element. Grooves and a corresponding counter-contour extending rectilinearly radially to the pivot axis and lying opposite to one another ensure an offset of 180° of the rear light units between the use position and the transport position.

According to a preferred embodiment, the engagement element is pretensioned in the direction of its locking position. Accordingly, the operator must intentionally bring the engagement element out of its locking position, when the rear light unit should be pivoted.

In order to realize the pretensioning of the engagement element, a spring element, in particular a helical compression spring, may be arranged in the guide groove of the rear light unit, wherein said spring element is supported against the base of the guide groove and the guide projection of the engagement element. In this way, the spring element, which pretensions the engagement element in the direction of its locking position, is completely surrounded by the engagement element and the rear light unit and, therefore, protected against the intrusion of dust and other contamination.

The engagement elements may have a central through-opening, which is penetrated by a hinge pin. In other words, the corresponding hinge pin, which is necessary for the bearing of the rear light units at the holding elements, may penetrate through the engagement element and, accordingly, also guide the engagement element.

The locking mechanism may further comprise an actuating element which is movable and interacts with the engagement element in such a way that the actuating element is movable between a detent position, in which the engaging element can move into its locking position, and an actuating position, in which the engagement element is in its release position. Such an actuating element allows the operator to bring the engagement element intentionally out of its locking position, thus releasing the rear light unit.

According to a preferred embodiment of the invention, the actuating element is movably arranged at the corresponding holding element. Preferably, the holding elements may have a C-shaped basic shape with outwardly pointing C-legs and the actuating element is arranged at an upper C-leg of the holding element. In this way, the actuating element is accessible from the outside, in particular from above, for the operator allowing an easy handling.

In concrete terms, the actuating element may be designed as a push button. Hence, the operator only must push, in particular from above, on the actuating element in order to bring the engagement element into its release position, thus releasing the rear light units and allowing to pivot them.

The actuating element may be connected in an axially fixed manner to a hinge pin. In this way, the hinge pin moves together with the actuating element. The fixation in an axially fixed manner can, for example, be realized by screwing the actuating element on a thread provided at the hinge pin and/or by a force-fit or form-fit press connection.

In a manner generally known per se, the actuating element may have an annular bearing groove which is formed concentrically to the pivot axis, wherein said bearing groove is open towards the rear light unit and a corresponding bearing projection of the holding element engages into this bearing groove. Such an annular bearing groove as well as a, in particular, annular bearing projection is easy to manufacture and ensures that the actuating element cannot cant relative to the holding element.

In order to realize the interaction between the actuating element and the engagement element, the actuating element may comprise a contact surface facing the rear light unit, which contact surface rests flat against the engagement element or can be brought into contact with the engagement element. This design is based on the consideration that the actuating element, which may in particular be formed as a push button, is pressed against the pretension of the engagement element in order to bring the engagement element out of its locking position. When the operator stops to push on the actuating element, the engagement element is free to move back into its locking position as soon as the rear light unit is positioned in such a way that the engagement contour comes - in its transport or in its use position - into engagement with the corresponding counter-contour, which is preferably formed at the holding element.

In a further elaboration of the rear load carrier according to the invention, the base body may comprise a transverse carrier element which connects the two holding elements to one another. In other words, between the two holding elements a transverse carrier element is provided. In this way, a stable design of the base body is realized as the base body is fully closed to the rear side.

The transverse carrier element may carry a license plate holder. In this way, the license plate holder is arranged transversely between the holding elements and the rear light units, when the rear light unites are in their use position.

Preferably, the rear light units are arranged in their transport position behind the license plate holder, wherein the rear light units in particular do not overlap one another. In this way, a space-saving storage of the rear load carrier can be achieved.

In order to be able to transport the rear load carrier manually, a handle may be arranged on the transverse carrier element. A footrest may be arranged on the transverse carrier element in order to be able to tilt the rear load carrier relative to a vehicle-side trailer coupling.

The base body may be formed in one piece or, alternatively, may consist of several segments which are connected to one another in a form-locking and/or force-locking manner, in particular may be screwed together. At least a partial section of the base body may be formed as a welded construction and may in particular comprise several profiles welded together. For example, the base body may have a rectangular base shape defining an inner space.

In order to supply the rear light units with electrical energy, the rear load carrier may further comprise power supply means. These power supply means may comprise a plug-connector for attachment to a vehicle-side power socket and a power cable to connect to the plug-connector and the rear light units. As the rear light units are held at the base body, no additional length of cable is necessary when the rear light units are moved between the transport and the use position. Accordingly, the power cable may be fixed section-by-section to the base body. Such a fixation ensures that no cable protrudes significantly from the base body which reduces the risk of being damaged. The cables may run freely in sections, in particular in the section adjacent to the rear light units.

According to an embodiment of the present invention, the rear load carrier may be formed as a bike carrier. The bike carrier may comprise at least one carrier part, in particular two or three carrier parts arranged offset to another in the longitudinal direction, for receiving wheels of bicycles, wherein the at least one carrier part preferably extends at least substantially in the transverse direction. These carrier parts may be formed as profile rails having a U-shaped basic structure upwardly open in order to receive wheels of bicycles.

With regard to the embodiment of the invention, reference is also made to sub-claims and to the following description of an exemplary embodiment with reference to the attached drawings. The drawings show:
- Figure 1: a rear load carrier according to the present invention in a perspective view;
- Figure 2: the rear load carrier shown in figure 1 with the rear light units out of their use position in a perspective view;
- Figure 3: the rear light carrier shown in figure 1 with the rear light units in their transport position in a perspective view;
- Figure 4: the rear load carrier shown in figure 1 in another perspective view;
- Figure 5: a detailed view of the rear light unit of the rear load carrier shown in figure 1 in a perspective view;
- Figure 6: a rear light unit of the rear load carrier shown in figure 1 in its use position and in its transport position in a top view;
- Figure 7: the locking mechanism of a rear light unit with respect to the holding element of the rear load carrier shown in figure 1 in a cross-sectional view;
- Figure 8: the locking mechanism shown in figure 7 in an exploded perspective view;
- Figure 9: a holding element of the rear load carrier shown in figure 1 in a perspective view; and
- Figure 10: an engagement element of the rear load carrier shown in figure 1 in a perspective view.

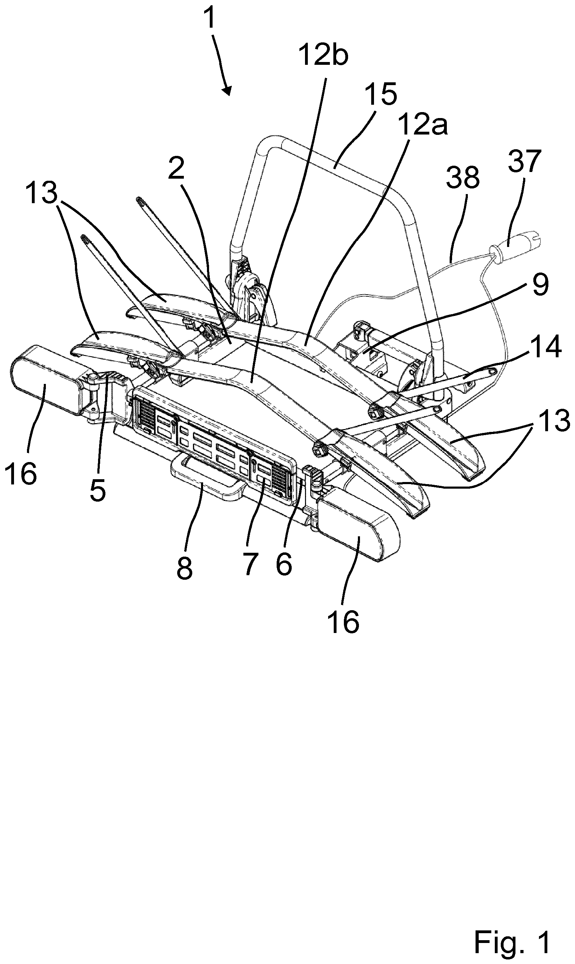

Figures 1 to 4 show a rear load carrier 1 designed as a bike carrier for mounting to a vehicle according to the present invention.

The rear load carrier 1 has a base body 2 which comprises a front segment 3 in the shape of a U open towards a rear side. The front segment 3 is designed as a welded construction of several profiles. The central section 3a of the front segment extends in a transverse direction T, whereas the U-legs 3b, 3c extend backwards in a longitudinal direction L.

Each of the U-legs of the front segment 3 carries one support element 4 which extends to the rear. One holding element 5 is provided at the rear end of each carrier element 4, which holding elements 5 arranged on transversely opposite sides to each other are connected by means of a transverse carrier element 6. The transverse carrier element 6 carries a license plate holder 7 and a footrest 8 in order to be able to tilt the rear load carrier 1 relative to a vehicle-side trailer coupling when mounted thereto.

At its front side, the base body 2 carries a connecting device 9 for attachment to a vehicle-side trailer coupling (not shown). In concrete terms, the connecting device 9 is formed such that it can engage in a force-fit manner around the ball of a trailer coupling of a vehicle. The connecting device 9 comprises a lever 10 for manual operation and a housing 11 including a coupling mechanism. The housing 11 is welded to the central leg of the front segment 3 of the base body 2.

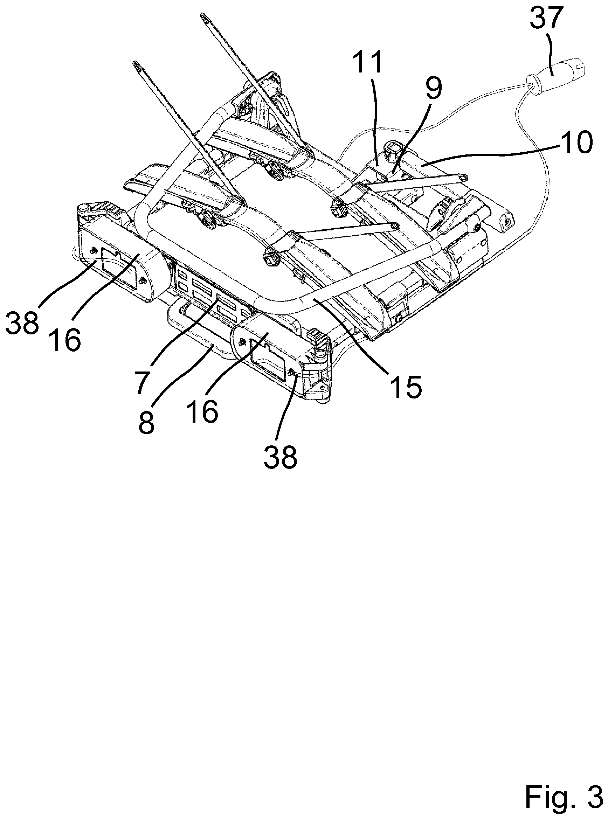

In order to receive bikes, the rear load carrier 1 comprises two carrier parts 12a, 12b which are designed as profile rails and extend substantially in the transverse direction. They are arranged offset to one another in the longitudinal direction L and are screwed to the base body. The carrier parts 12a, 12b comprise sliding profiles 13, which can be moved relative to the base body between a transversely inner storage position as shown in figure 3 and an outer operation position as shown in figure 1. Tensioning means in the form of tensioning belts 14 are provided at each carrier part 12a, 12b in order to brace the wheels of bikes against these.

Furthermore, the rear load carrier 1 comprises a yoke 15, which is held at the base body 2 and can be pivoted about a pivot axis extending in the transverse direction between a horizontal position as shown in figure 3 and a vertical position as shown in figure 1. By means of such a yoke 15, the frames of the bikes to be transported can be secured via strap frame holders (not shown).

The rear load carrier 1 further comprises two rear light units 16, each of which is held at one holding element 5 of the base body 2. In concrete terms, each rear light unit 16 has a one-piece basic body 17, which carries two projections 18 - an upper projection 18a and a lower projection 18b - spaced vertically apart from each other and protruding between corresopnding C-legs 19 of the holding elements 5. Each holding element 5 has an upper C-leg 19a and a lower C-leg 19b, which are both directed obliquely backwards and transversely outwards.

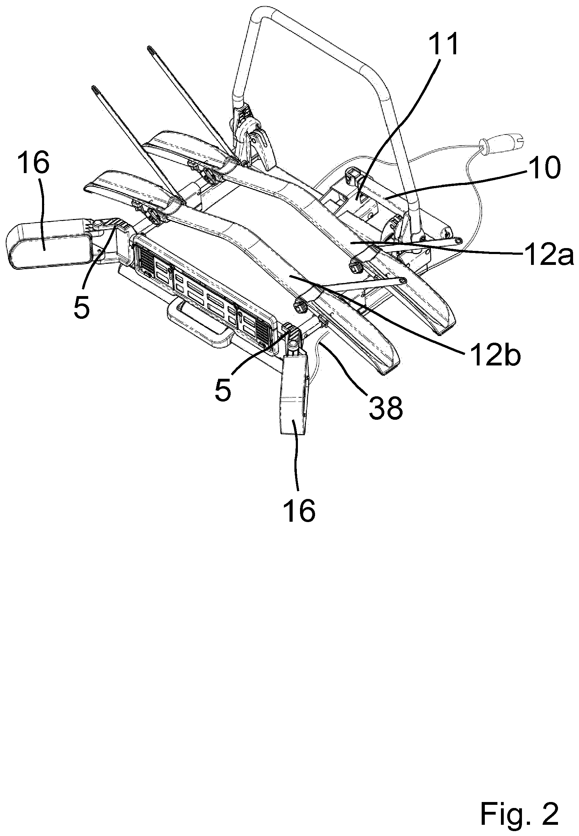

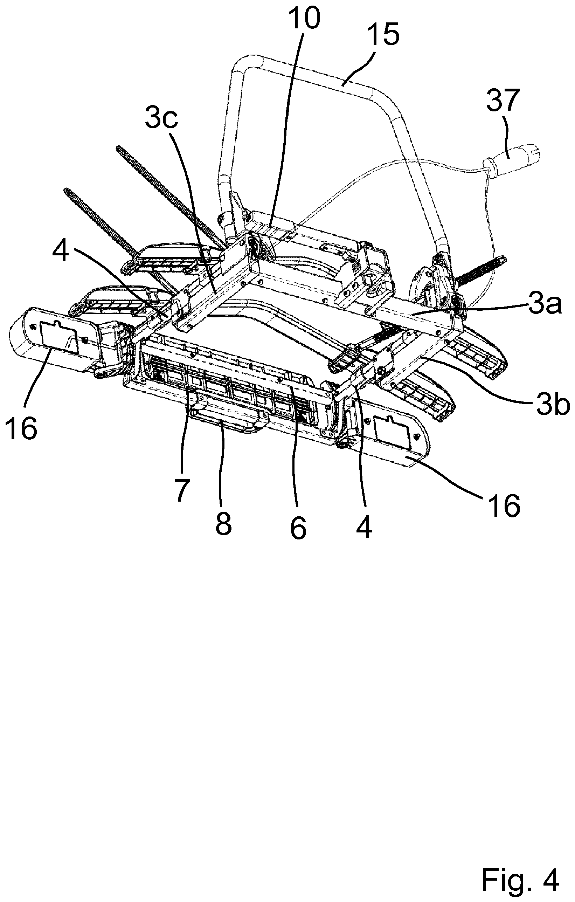

The rear light units 16 can be pivoted about a corresponding pivot axis X₁, X₂, which extend upright, presently vertically, with respect to a plane defined by the longitudinal direction L and the transverse direction T between a use position and a transport position. In the use position, as shown for example in figures 1 and 4, the rear light units 16 are folded out and project in the transverse direction from the base body 2. In the transport position, as shown in figure 2, the rear light units 16 are folded in behind the base body 2, in concrete terms behind the license plate holder 7 without overlapping each other. The use position and the transport position of the rear light units 16 are offset relative to one another by a pivoting angle of 180°.

In order to pivot the rear light units 16 without a significant resistance, bearing means are provided. These bearing means comprises hinge pins 20a, 20b oriented coaxially to each other. At each rear light unit 16, one hinge pin 20a is provided at the upper projection 18a extending into a corresponding bearing bore 21a of the upper C-leg 19a of the holding element 5 and one hinge pin 20b is provided in the lower projection 18b extending into a corresponding bearing bore 21b the lower C-leg 15b of the holding element 5. The hinge pins 20a, 20b are designed as screws, which means, that a corresponding nut 22 is provided at each hinge pin 20a, 20b in order to avoid unintended loosening of the hinge pins.

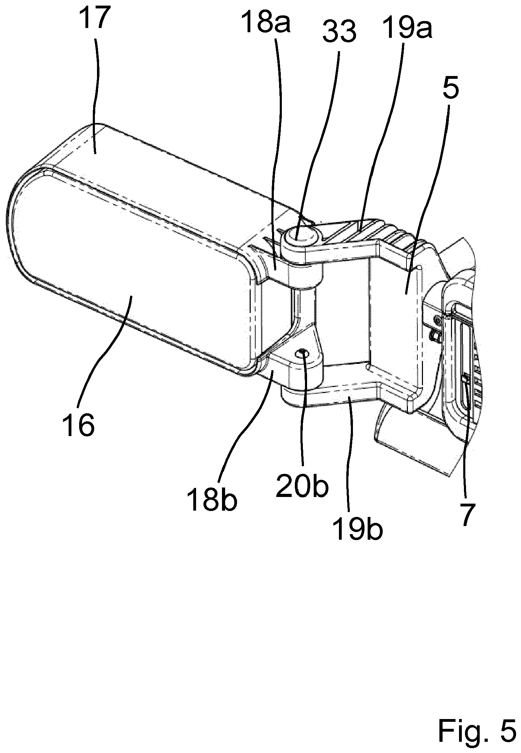

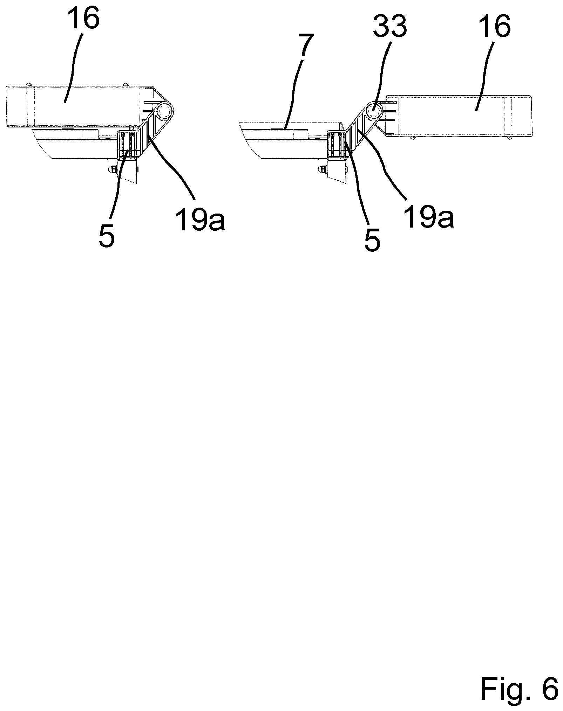

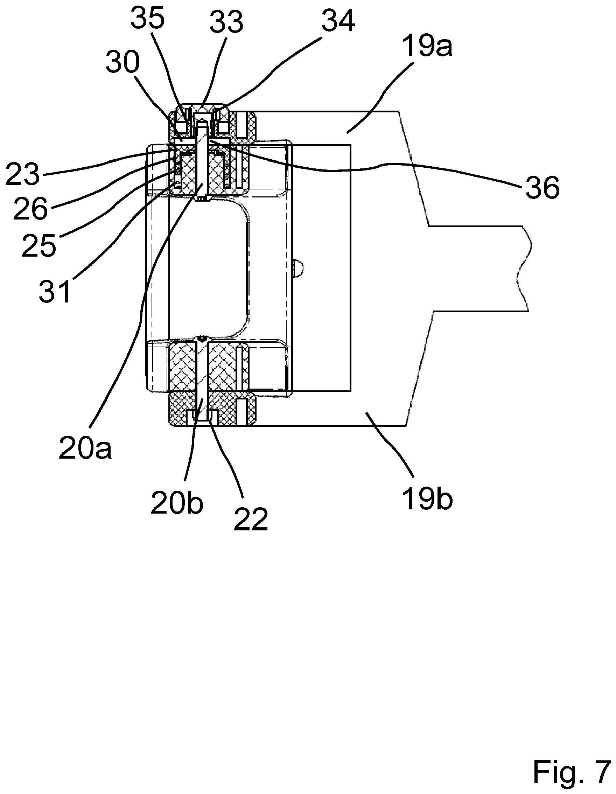

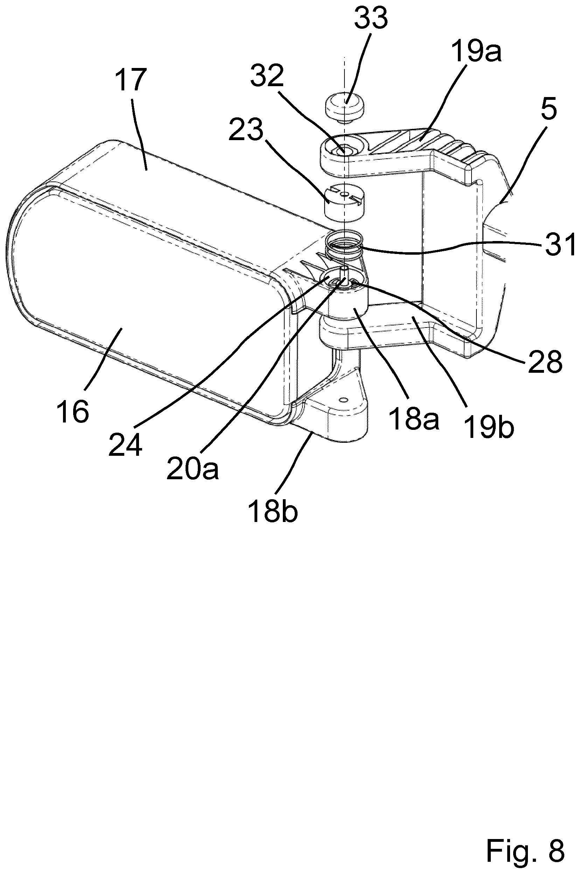

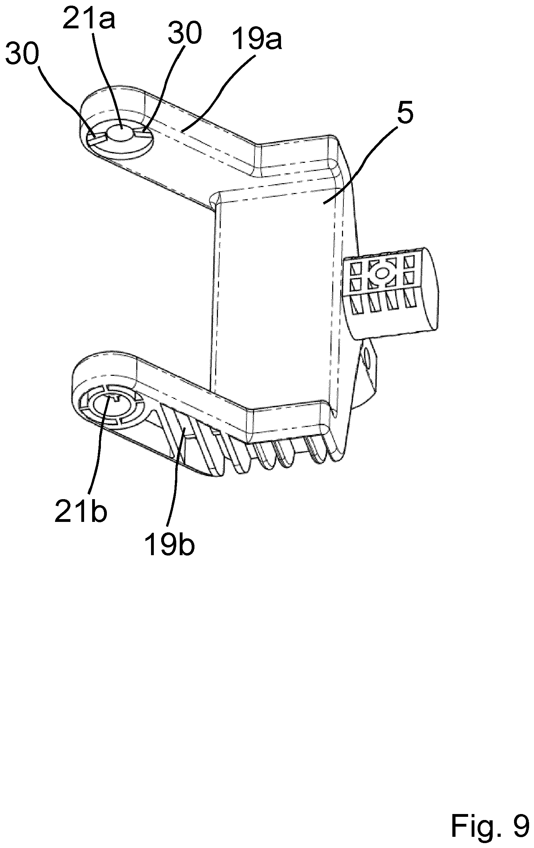

As it is shown more in detail in figures 5 to 10, a locking mechanism is assigned to each rear light unit 16 and designed in such a way that the rear light unit 16 can be locked in its transport position and in its use position. In concrete terms, the locking mechanism is arranged at the upper projection 18a of the rear light unit 16 and the upper C-leg 19a of the holding element 5.

The locking mechanism comprises an engagement element 23, which is displaceable along the pivot axis X₁ between a lower release position and an upper locking position. In the locking position, the rear light unit 16 is locked relative to the base body 2, whereas the rear light unit 16 is freely pivotable when the engagement element 23 is in its release position.

The engagement element 23 is arranged in a recess 24 formed in the upper projection 18a of the rear light unit 16. The recess 24 is open towards the corresponding upper C-leg 19a of the holding element 5. A guide groove 25 open towards the upper C-leg 19a is formed in the recess 24. A corresponding annular guide projection 26 of the engagement element 23 engages into the guide grove 25.

The engagement elements 23 are coupled in a rotationally fixed manner to the respective rear light unit 16. For this purpose, each engagement element 23 has three guiding recesses 27, which are open towards the bottom end face of the engagement element 23 and are distributed uniformly over the circumference. Corresponding guiding protrusions 28 are formed in the recess 24 of the rear light unit 16. These engage into the guiding recesses in order to guide the engagement element 23 relative to the rear light unit 16 in a rotationally fixed manner.

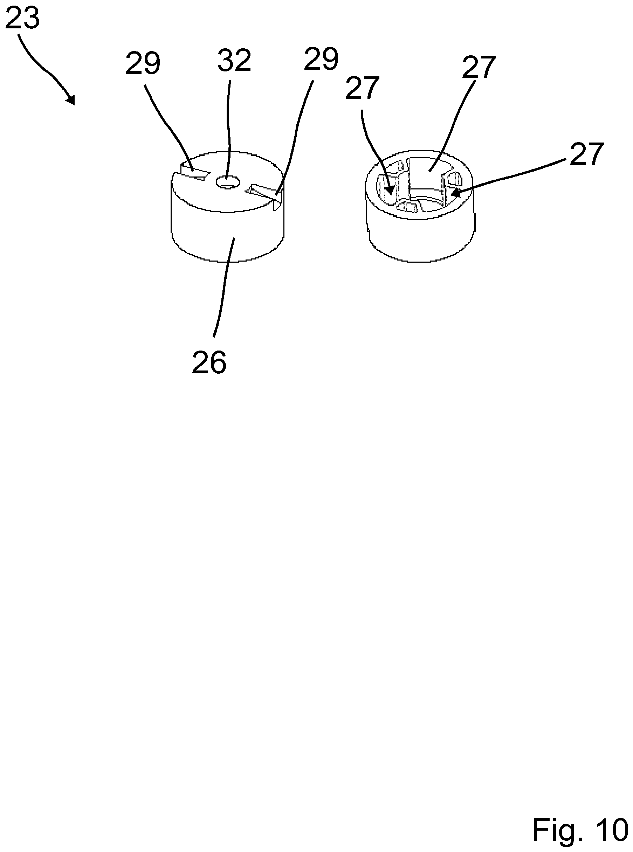

As it is visible in figure 10, the engagement element 23 has at its upper end face an engagement contour, which can be brought into positive engagement with a corresponding counter-contour formed at a lower surface of the upper C-leg 19a of the holding element 5. In concrete terms, the engagement contour comprises two engagement grooves 29, which extend rectilinearly radially to the corresponding pivot axis X₁ and lie opposite to one another with respected to the pivot axis X₁. The engagement grooves 29 have a rectangular cross-section and have, radially outwardly from the pivot axis X₁, a linearly increasing groove depth. They are open towards the radially outer surface of the engagement element 23.

In the upper C-leg 19a of the holding element 5, two corresponding engagement protrusions 30 are formed, the shape of which is complementary to the engagement contour, namely the engagement grooves 29 of the engagement element 23.

The engagement element 23 is pretensioned in the direction of its upper locking position. For this purpose, a helical compression spring 31 is arranged in the guide groove 25 and supported against the base of the guide groove 25 and the guide projection 26 of the engagement element 23. The engangement element 23 further has a central through-opening 32, which is penetrated by the corresponding hinge pin 20a.

The locking mechanism further comprises an actuating element, which is formed as a push button 33. The push button is movably arranged at the upper C-leg 19a of the holding element 5 and interacts with the engagement element 23 in such a way that the push button is movable between a detent position and an actuating position. In the detent position of the push button 32, the engagement element 23 can move into its locking position. In the actuating position of the push button 32, the engagement element 23 is in its release position.

In order to avoid canting of the push button 33, it has an annular bearing groove 34, which is formed concentrically to the pivot axis X₁. The bearing groove 34 is open towards the bottom and a corresponding annular bearing projection 35 formed in the upper C-leg 19a of the holding element 5 engages into the bearing groove 34.

In order to realize the interaction between the push button 33 and the engagement element 23, the push button 33 has a lower contact surface 36 facing the rear light unit 16, wherein the contact surface 36 rests flat against the engagement element 23 or can be brought into contact with the engagement element 23.

The rear load carrier 1 further comprises power supply means for supplying the rear light units 16 with electrical power. The power supply means comprise a plug connector 37 for attachment to a vehicle-side power socket and a power cable 38 to connect the plug-connector and the rear light units 16. As it is visible in figure 3 and 4, the power cable 38 is fixed section-by-section to the base body 2. In the section adjacent to the rear light units 16, the power cables 38 run freely.

When the rear light units 16 shall be moved from their use position shown in figure 1 into their transport position shown in figure 3, at first the operator has to push the push button 33 downwardly. In this way, due to the contact surface 36 of the push button 33 being in contact with the engagement element 23, the engagement element 23 is brought out of its locking position into its release position. Hence, the engagement grooves 29 formed in the upper end face of the engagement element 23 come out of engagement from the corresponding engagement protrusions 30 formed in the upper C-leg 19a of the holding element 5.

Accordingly, the rear light unit 16 can be pivoted freely out of its use position about the pivot axis X₁. As during this pivoting movement the engagement grooves 29 of the engagement element 23 are not aligned with the corresponding engagement protrusions 30 formed in the upper C-leg 19a of the holding element 5, the engagement element 23 cannot move vertically upwards into its locking position, even if the push button 33 is not more pushed downwardly by the operator and, accordingly, moved into its detent position.

When the rear light unit 16 reaches its transport position, the engagement grooves 29 of the engagement element 23 are aligned with the corresponding engagement protrusions 30 formed at the upper C-leg 19a of the holding element 5. Due to the pretension of the engagement element 23 towards its locking position caused by the helical compression spring 31, the engagement element 23 is moved upwards so that the engagement grooves 29 come into engagement with the engagement protrusions 30. In this way, the rear light unit 16 is safely locked in its transport position.

### List of reference signs

- 1: rear load carrier
- 2: base body
- 3: front segment
- 3a: central section
- 3b, 3c: U-leg
- 4: support element
- 5: holding element
- 6: transverse carrier element
- 7: license plate holder
- 8: footrest
- 9: connecting device
- 10: lever
- 11: housing
- 12a, b: carrier parts
- 13: sliding profiles
- 14: tensioning belts
- 15: yoke
- 16: rear light unit
- 17: basic body
- 18a: upper projection
- 18b: lower projection
- 19a: upper C-leg
- 19b: lower C-leg
- 20a, 20b: hinge pin
- 21a, 21b: bearing bore
- 22: nut
- 23: engagement element
- 24: recess
- 25: guide groove
- 26: guide projection
- 27: guiding recess
- 28: guiding protrusions
- 29: engagement groove
- 30: engagement protrusion
- 31: helical compression spring
- 32: central through-opening
- 33: push button
- 34: bearing groove
- 35: bearing projection
- 36: contact surface
- 37: plug connector
- 38: power cable

- X₁, X₂: pivot axis
- L: longitudinal direction
- T: transverse direction

## Claims

1. Rear load carrier (1) for mounting to a vehicle with
a base body (2), which defines a longitudinal direction (L) between its front side and its rear side and a transverse direction (T),
a connecting device (9) for attachment to a vehicle-side trailer coupling provided at the front side of the base body (2),
two holding elements (5) provided on the rear end region of the base body (2) and arranged on transversely opposite sides thereof,
two rear light units (16), each of which is held at one of the holding elements (5) and each of which can be pivoted about a pivot axis (X₁, X₂) between a use position, in which the rear light units (16) are folded out and project in the transverse direction (T) from the base body (2), and a transport position, in which the rear light units (16) are folded in behind the base body (2),
wherein the pivot axes (X₁, X₂) of the rear light units (16) extend upright with respect to and in particular vertically to a plane defined by the longitudinal direction (L) and the transverse direction (T), wherein a locking mechanism is assigned to each rear light unit (16) and is designed to lock the rear light unit (16) in its transport position and in its use position,
**characterized in that** the locking mechanism comprises an engagement element (23), which is displaceable along the pivot axis (X1, X2) of the respective rear light unit (16) between a release position, in which the rear light units (16) are freely pivotable, and a locking position, in which the rear light units (16) are locked relative to the base body.

2. Rear load carrier (1) according to claim 1, **characterized in that** bearing means are provided for pivotably bearing the rear light units (16), wherein, in particular, the bearing of the rear light units (16) at the holding elements (5) are formed as sliding bearings.

3. Rear load carrier (1) according to claim 2, **characterized in that** the holding elements (5) have a C-shaped basic shape, the respective rear light unit (16) being arranged pivotably between the C-legs (19a, 19b) and the connection webs of the holding elements (5) facing to each other, wherein, in particular, the C-legs (19a, 19b) are directed obliquely backwards and transversely outwards.

4. Rear load carrier (1) according to claim 3 , **characterized in that** the bearing means comprise hinge pins (20, 20b) which engage in corresponding bearing bores (21a, 21b), wherein, in particular, the hinge pins (20, 20b) are designed as screws.

5. Rear load carrier (1) according to any of the preceding claims, **characterized in that** the rear light units (16) each have a basic body (17), in particular a one-piece basic body (17).

6. Rear load carrier (1) according to claim 5 and claim 3, **characterized in that** the basic bodies of the rear light units (16) each carry two projections (18a, 18b) which protrude between the C-legs (19a, 19b) of the holding elements (5), wherein, in particular, the bearing means comprise two hinge pins (20, 20b) which are oriented coaxially to one another, are each arranged at one of the projections (18a, 18b) and engage in corresponding bearing bores (21a, 21b) in the C-legs (19a, 19b) of the holding elements (5).

7. Rear load carrier (1) according to any of the preceding claims, **characterized in that** the engagement element (23) is coupled in a rotationally fixed manner to the respective rear light unit (16).

8. Rear load carrier (1) according to any of the preceding claims, **characterized in that** the engagement element (23) is arranged in a recess (24) of the rear light unit (16), said recess (24) being open towards the corresponding holding element (5),
wherein, in particular, the holding elements (5) have a C-shaped basic shape with outwardly pointing C-legs (19a, 19b) and the recess (24) is open towards an upper C-leg (19a) of the holding element (5).

9. Rear load carrier (1) according to claim 8, **characterized in that** a guide groove (25) open towards the corresponding holding element (5) and extending in an annular manner round the pivot axis (X₁, X₂) is formed in the recess (24), in which guide groove (25) a corresponding guide projection (26) of the engagement element (23) engages.

10. Rear load carrier (1) according to any of the preceding claims, **characterized in that** the engagement element (23) has an engagement contour in an end face facing towards the corresponding holding element (5), which engagement contour is or can be brought into positive engagement with a corresponding counter-contour on the holding element (5) in its locking position,
wherein, in particular, the engagement contour comprises two engagement grooves (29) which extend rectilinearly and radially to the pivot axis (X₁, X₂) and preferably lie opposite to one another with respect to the pivot axis (X₁, X₂),
wherein, preferably, the engagement grooves (29) have a rectangular cross-section and have - radially outwardly from the pivot axis (X₁, X₂) - an increasing groove depth, in particular a linearly increasing groove depth.

11. Rear load carrier (1) according to any of claim 10, **characterized in that** the corresponding counter-contour formed on the holding element (5) has a shape complementary to the engagement contour.

12. Rear load carrier (1) according to any of claims 8 to 11, **characterized in that** the engagement element (23) is pretensioned in the direction of its locking position.

13. Rear load carrier (1) according to claim 12 and claim 9, **characterized in that** a spring element, in particular a helical compression spring (31), is arranged in the guide groove (25) of the rear light unit (16), said spring element supported against the base of the guide groove (25) and the guide projection (26) of the engagement element (23).

14. Rear load carrier (1) according to any of claims 4 or 5, **characterized in that** the engagement element (23) has a central through-opening (32) which is penetrated by a hinge pin (20, 20b).

15. Rear load carrier (1) according to any of the preceding claims, **characterized in that** the locking mechanism further comprises an actuating element which is movable and interacts with the engagement element (23) in such a way that the actuation element is movable between a detent position, in which the engagement element (23) can move into its locking position, and an actuating position, in which the engagement element (23) is in its release position,
wherein, in particular, the actuating element is movably arranged at the corresponding holding element (5), the holding elements (5) preferably having a C-shaped basic shape with outwardly pointing C-legs (19a, 19b) and the actuating element preferably being arranged on an upper C-leg (19a) of the holding element (5), and/or
wherein, in particular, the actuating element is designed as a push button (33) and/or
the actuating element is connected in an axially fixed manner to a hinge pin (20a) and/or
the actuating element has an annular bearing groove (34), which is formed concentrically to the pivot axis (X₁, X₂), which is open towards the rear light unit (16) and in which a corresponding bearing projection (35) of the holding element (5) engages and/or
the actuating element comprises a contact surface (36) facing the rear light unit (16), which contact surface (36) rests flat against the engagement element (23) or can be brought into contact with the engagement element (23).

16. Rear load carrier (1) according to any of the preceding claims, **characterized in that** the base body (2) comprises a transverse carrier element (6) which connects the two holding elements (5) to one another,
wherein, in particular, the transverse carrier element (6) carries a license plate holder (7),
wherein, preferably, the rear light units (16) are arranged in their transport position behind the license plate holder (7), wherein the rear light units (16) particularly preferred do not overlap one another.

17. Rear load carrier (1) according to claim 16, **characterized in that** a handle is arranged on the transverse carrier element (6) in order to be able to transport the rear load carrier manually, and/or **in that** a footrest (8) is arranged on the transverse carrier element in order to be able to tilt the rear load carrier relative to a vehicle-side trailer coupling.

18. Rear load carrier (1) according to any of the preceding claims, **characterized in that** the use position and the transport position of the rear light units (16) are offset relative to one another by a pivoting angle of at least 160°, in particular of at least 170°, preferably of 180°, and/or
**in that** the base body (2) is formed in one piece or consists of several segments which are connected to one another in a form-locking and/or force-locking manner, in particular are screwed together, and/or
**in that** at least a partial section of the base body (2) is formed as a welded construction and in particular comprises several profiles welded together, and/or
**in that** the rear load carrier further comprises power supply means for supplying the rear light units (16) with electrical power,
wherein, in particular, the power supply means comprises a plug connector (37) for attachment to a vehicle-side socket,
wherein, preferably, the power supply means comprise power cables (38), which lead from the plug connector (37) to both rear light units (16),
wherein, particularly preferred, the power cables are attached to the base body (2) in sections and/or the cables (38) run freely in sections, in particular in the section adjacent to the rear light units (16), and/or
**in that** the rear load carrier (1) is formed as a bike carrier,
wherein, in particular, it comprises at least one carrier part, in particular two or three carrier parts arranged offset to one another in the longitudinal direction (L), for receiving wheels of bicycles, wherein the at least one carrier part preferably extends at least substantially in the transverse direction (T),
wherein, preferably, clamping means for clamping wheels of bicycles are attached to each carrier part in order to fix the wheels to the carrier.

## Patentansprüche

1. Hecklastenträger (1) zur Montage an einem Fahrzeug mit
einem Grundkörper (2), der eine Längsrichtung (L) zwischen seiner Vorderseite und seiner Rückseite und eine Querrichtung (T) definiert,
einer an einer an der Vorderseite des Grundkörpers (2) vorgesehenen Verbindungseinrichtung (9) zur Befestigung an einer fahrzeugseitigen Anhängerkupplung,
zwei am hinteren Endbereich des Grundkörpers (2) vorgesehenen und an dessen in Querrichtung gegenüberliegenden Seiten angeordneten Halteelementen (5),
zwei Rücklichteinheiten (16), die jeweils an einem der Halteelemente (5) gehalten sind und die jeweils um eine Schwenkachse (X1, X2) zwischen einer Gebrauchsstellung, in der die Rücklichteinheiten (16) ausgeklappt sind und in Querrichtung (T) vom Grundkörper (2) abstehen, und einer Transportstellung, in der die Rücklichteinheiten (16) hinter den Grundkörper (2) eingeklappt sind, verschwenkbar sind,
wobei die Schwenkachsen (X1, X2) der Rücklichteinheiten (16) senkrecht zu einer durch die Längsrichtung (L) und die Querrichtung (T) definierten Ebene verlaufen, wobei jeder Rücklichteinheit (16) ein Verriegelungsmechanismus zugeordnet ist, der zum Verriegeln der Rücklichteinheit (16) in ihrer Transportstellung und in ihrer Gebrauchsstellung ausgebildet ist,
**dadurch gekennzeichnet, dass** der Verriegelungsmechanismus ein Eingriffselement (23) umfasst, das entlang der Schwenkachse (X1, X2) der jeweiligen Rücklichteinheit (16) zwischen einer Freigabeposition, in der die Rücklichteinheiten (16) frei schwenkbar sind, und einer Verriegelungsposition, in der die Rücklichteinheiten (16) relativ zum Grundkörper verriegelt sind, verschiebbar ist.

2. Hecklastenträger (1) nach Anspruch 1, **dadurch gekennzeichnet, dass** Lagermittel zur schwenkbaren Lagerung der Rücklichteinheiten (16) vorgesehen sind, wobei insbesondere die Lagerung der Rücklichteinheiten (16) an den Halteelementen (5) als Gleitlager ausgebildet ist.

3. Hecklastenträger (1) nach Anspruch 2, **dadurch gekennzeichnet, dass** die Halteelemente (5) eine C-förmige Grundform aufweisen, wobei die jeweilige Rücklichteinheit (16) zwischen den C-Schenkeln (19a, 19b) schwenkbar angeordnet ist und die Verbindungsstege der Halteelemente (5) einander zugewandt sind, wobei insbesondere die C-Schenkel (19a, 19b) schräg nach hinten und quer nach außen gerichtet sind.

4. Hecklastenträger (1) nach Anspruch 3, **dadurch gekennzeichnet, dass** die Lagermittel Gelenkbolzen (20, 20b) umfassen, die in entsprechende Lagerbohrungen (21a, 21b) eingreifen, wobei insbesondere die Gelenkbolzen (20, 20b) als Schrauben ausgebildet sind.

5. Hecklastenträger (1) nach einem der vorhergehenden Ansprüche, **dadurch gekennzeichnet, dass** die Rücklichteinheiten (16) jeweils einen Grundkörper (17), insbesondere einen einteiligen Grundkörper (17), aufweisen.

6. Hecklastenträger (1) nach Anspruch 5 und Anspruch 3, **dadurch gekennzeichnet, dass** die Grundkörper der Rücklichteinheiten (16) jeweils zwei Vorsprünge (18a, 18b) tragen, die zwischen die C-Schenkel (19a, 19b) der Halteelemente (5) ragen, wobei, insbesondere, die Lagermittel zwei koaxial zueinander ausgerichtete Scharnierstifte (20, 20b) umfassen, die jeweils an einem der Vorsprünge (18a, 18b) angeordnet sind und in entsprechende Lagerbohrungen (21a, 21b) in den C-Schenkeln (19a, 19b) der Halteelemente (5) eingreifen.

7. Hecklastenträger (1) nach einem der vorhergehenden Ansprüche, **dadurch gekennzeichnet, dass** das Eingriffselement (23) drehfest mit der jeweiligen Rücklichteinheit (16) gekoppelt ist.

8. Hecklastenträger (1) nach einem der vorhergehenden Ansprüche, **dadurch gekennzeichnet, dass** das Eingriffselement (23) in einer Ausnehmung (24) der Rücklichteinheit (16) angeordnet ist, wobei die Ausnehmung (24) zu dem entsprechenden Halteelement (5) hin offen ist,
wobei insbesondere die Halteelemente (5) eine C-förmige Grundform mit nach außen weisenden C-Schenkeln (19a, 19b) aufweisen und die Ausnehmung (24) zu einem oberen C-Schenkel (19a) des Halteelements (5) hin offen ist.

9. Hecklastenträger (1) nach Anspruch 8, **dadurch gekennzeichnet, dass** in der Ausnehmung (24) eine zum entsprechenden Halteelement (5) hin offene, ringförmig um die Schwenkachse (X1, X2) verlaufende Führungsnut (25) ausgebildet ist, in die ein entsprechender Führungsvorsprung (26) des Eingriffselements (23) eingreift.

10. Hecklastenträger (1) nach einem der vorhergehenden Ansprüche, **dadurch gekennzeichnet, dass** das Eingriffselement (23) an einer dem entsprechenden Halteelement (5) zugewandten Stirnseite eine Eingriffskontur aufweist, die mit einer entsprechenden Gegenkontur am Halteelement (5) in dessen Verriegelungsstellung in formschlüssigen Eingriff gebracht ist oder gebracht werden kann,
wobei insbesondere die Eingriffskontur zwei Eingriffsnuten (29) aufweist, die sich geradlinig und radial zur Schwenkachse (X1, X2) erstrecken und vorzugsweise in Bezug auf die Schwenkachse (X1, X2) einander gegenüberliegen,
wobei vorzugsweise die Eingriffsnuten (29) einen rechteckigen Querschnitt aufweisen und - radial nach außen von der Schwenkachse (X1, X2) - eine zunehmende, insbesondere linear zunehmende Nuttiefe aufweisen.

11. Hecklastenträger (1) nach einem der Ansprüche 10, **dadurch gekennzeichnet, dass** die entsprechende am Halteelement (5) ausgebildete Gegenkontur eine zur Eingriffskontur komplementäre Form aufweist.

12. Hecklastenträger (1) nach einem der Ansprüche 8 bis 11, **dadurch gekennzeichnet, dass** das Eingriffselement (23) in Richtung seiner Verriegelungsposition vorgespannt ist.

13. Hecklastenträger (1) nach Anspruch 12 und Anspruch 9, **dadurch gekennzeichnet, dass** in der Führungsnut (25) der Rücklichteinheit (16) ein Federelement, insbesondere eine Schraubendruckfeder (31), angeordnet ist, das sich am Grund der Führungsnut (25) und dem Führungsvorsprung (26) des Eingriffselements (23) abstützt.

14. Hecklastenträger (1) nach einem der Ansprüche 4 oder 5, **dadurch gekennzeichnet, dass** die Eingriffselemente (23) eine zentrale Durchgangsöffnung (32) aufweisen, die von einem Scharnierstift (20, 20b) durchdrungen ist.

15. Hecklastenträger (1) nach einem der vorhergehenden Ansprüche, **dadurch gekennzeichnet, dass** der Verriegelungsmechanismus ferner ein Betätigungselement umfasst, das beweglich ist und mit dem Eingriffselement (23) derart zusammenwirkt, dass das Betätigungselement zwischen einer Raststellung, in der sich das Eingriffselement (23) in seine Verriegelungsstellung bewegen kann, und einer Betätigungsstellung, in der sich das Eingriffselement (23) in seiner Freigabestellung befindet, beweglich ist,
wobei insbesondere das Betätigungselement beweglich an dem zugehörigen Halteelement (5) angeordnet ist, wobei die Halteelemente (5) vorzugsweise eine C-förmige Grundform mit nach außen weisenden C-Schenkeln (19a, 19b) aufweisen und das Betätigungselement vorzugsweise an einem oberen C-Schenkel (19a) des Halteelements (5) angeordnet ist, und/oder
wobei insbesondere das Betätigungselement als Druckknopf (33) ausgebildet ist und/oder
das Betätigungselement axial fest mit einem Gelenkbolzen (20a) verbunden ist und/oder
das Betätigungselement eine konzentrisch zur Schwenkachse (X1, X2) ausgebildete ringförmige Lagernut (34) aufweist, die zur Rücklichteinheit (16) hin offen ist und in die ein entsprechender Lagervorsprung (35) des Halteelements (5) eingreift und/oder
das Betätigungselement eine der Rücklichteinheit (16) zugewandte Kontaktfläche (36) aufweist, die flächig an dem Eingriffselement (23) anliegt oder mit dem Eingriffselement (23) in Kontakt bringbar ist.

16. Hecklastenträger (1) nach einem der vorhergehenden Ansprüche, **dadurch gekennzeichnet, dass** der Grundkörper (2) ein Querträgerelement (6) aufweist, das die beiden Halteelemente (5) miteinander verbindet,
wobei insbesondere das Querträgerelement (6) einen Kennzeichenträger (7) trägt,
wobei vorzugsweise die Rücklichteinheiten (16) in ihrer Transportposition hinter dem Kennzeichenhalter (7) angeordnet sind, wobei die Rücklichteinheiten (16) besonders bevorzugt einander nicht überlappen.

17. Hecklastenträger (1) nach Anspruch 16, **dadurch gekennzeichnet, dass** an dem Querträgerelement (6) ein Griff angeordnet ist, um den Heckladungsträger manuell transportieren zu können, und/oder dass an dem Querträgerelement eine Fußstütze (8) angeordnet ist, um den Heckladungsträger relativ zu einer fahrzeugseitigen Anhängerkupplung kippen zu können.

18. Hecklastenträger (1) nach einem der vorhergehenden Ansprüche, **dadurch gekennzeichnet, dass** die Gebrauchsstellung und die Transportstellung der Rücklichteinheiten (16) um einen Schwenkwinkel von mindestens 160°, insbesondere von mindestens 170°, vorzugsweise von 180°, gegeneinander versetzt sind und/oder
dass der Grundkörper (2) einstückig ausgebildet ist oder aus mehreren Segmenten besteht, die form- und/oder kraftschlüssig miteinander verbunden, insbesondere verschraubt sind, und/oder
dass zumindest ein Teilabschnitt des Grundkörpers (2) als Schweißkonstruktion ausgebildet ist und insbesondere aus mehreren miteinander verschweißten Profilen besteht, und/oder
dass der Hecklastenträger ferner Stromversorgungsmittel zur Versorgung der Rücklichteinheiten (16) mit elektrischem Strom aufweist,
wobei insbesondere das Stromversorgungsmittel einen Steckverbinder (37) zum Anschluss an eine fahrzeugseitige Steckdose aufweist,
wobei die Stromversorgungsmittel vorzugsweise Stromkabel (38) umfassen, die von dem Steckverbinder (37) zu beiden Rücklichteinheiten (16) führen,
wobei besonders bevorzugt die Stromkabel abschnittsweise am Grundkörper (2) befestigt sind und/oder die Kabel (38) abschnittsweise frei verlaufen, insbesondere in dem an die Rücklichteinheiten (16) angrenzenden Abschnitt, und/oder
dass der Hecklastenträger (1) als Fahrradträger ausgebildet ist,
wobei er insbesondere mindestens ein Trägerteil, insbesondere zwei oder drei in Längsrichtung (L) versetzt zueinander angeordnete Trägerteile zur Aufnahme von Rädern von Fahrrädern aufweist, wobei sich das mindestens eine Trägerteil vorzugsweise zumindest im Wesentlichen in Querrichtung (T) erstreckt,
wobei vorzugsweise an jedem Trägerteil Klemmmittel zum Festklemmen von Rädern von Fahrrädern angebracht sind, um die Räder am Träger zu fixieren.

## Revendications

1. Porte-charge arrière (1) destiné à être monté sur un véhicule avec
un corps de base (2), qui définit une direction longitudinale (L) entre son côté avant et son côté arrière et une direction transversale (T),
un dispositif de raccordement (9) prévu à l'avant du corps de base (2), destiné à être fixé à un attelage de remorque côté véhicule,
deux éléments de maintien (5) prévus sur la zone d'extrémité arrière du corps de base (2) et disposés sur des côtés transversalement opposés de celui-ci,
deux unités d'éclairage arrière (16), dont chacune est maintenue sur l'un des éléments de maintien (5) et dont chacune peut pivoter autour d'un axe de pivotement (X1, X2) entre une position d'utilisation, dans laquelle les unités d'éclairage arrière (16) sont dépliées et dépassent dans la direction transversale (T) du corps de base (2), et une position de transport, dans laquelle les unités d'éclairage arrière (16) sont repliées derrière le corps de base (2),
dans laquelle les axes de pivotement (X1, X2) des unités d'éclairage arrière (16) s'étendent verticalement par rapport à un plan défini par la direction Ion-gitudinale (L) et la direction transversale (T), et dans laquelle un mécanisme de verrouillage est associé à chaque unité d'éclairage arrière (16) et est conçu pour verrouiller l'unité d'éclairage arrière (16) dans sa position de transport et dans sa position d'utilisation,
**caractérisé en ce que** le mécanisme de verrouillage comprend un élément d'engagement (23), qui est déplaçable le long de l'axe de pivotement (X1, X2) de l'unité d'éclairage arrière (16) respective entre une position de libération, dans laquelle les unités d'éclairage arrière (16) peuvent pivoter librement, et une position de verrouillage, dans laquelle les unités d'éclairage arrière (16) sont verrouillées par rapport au corps de base.

2. Porte-charge arrière (1) selon la revendication 1, **caractérisé en ce que** des moyens de support sont prévus pour supporter de manière pivotante les unités d'éclairage arrière (16), le support des unités d'éclairage arrière (16) sur les éléments de maintien (5) étant notamment réalisé sous forme de paliers lisses.

3. Porte-charge arrière (1) selon la revendication 2, **caractérisé en ce que** les éléments de maintien (5) ont une forme de base en forme de C, l'unité d'éclairage arrière respective (16) étant disposée de manière pivotante entre les branches de C (19a, 19b) et les nervures de liaison des éléments de maintien (5) tournées l'une vers l'autre, les branches de C (19a, 19b) étant notamment dirigées obliquement vers l'arrière et transversalement vers l'extérieur.

4. Porte-charge arrière (1) selon la revendication 3, **caractérisé en ce que** les moyens de support comprennent des axes d'articulation (20, 20b) qui s'engagent dans des alésages de support correspondants (21a, 21b), les axes d'articulation (20, 20b) étant notamment conçus comme des vis.

5. Porte-charge arrière (1) selon l'une quelconque des revendications précédentes, **caractérisé en ce que** les unités d'éclairage arrière (16) présentent chacune un corps de base (17), en particulier un corps de base (17) monobloc.

6. Porte-charge arrière (1) selon la revendication 5 et la revendication 3, **caractérisé en ce que** les corps de base des unités d'éclairage arrière (16) portent chacun deux saillies (18a, 18b) qui font saillie entre les pattes en C (19a, 19b) des éléments de maintien (5), dans lequel, en particulier, les moyens de palier comprennent deux axes d'articulation (20, 20b) orientés coaxialement l'un par rapport à l'autre, qui sont disposés chacun sur l'une des saillies (18a, 18b) et qui s'engagent dans des alésages de palier (21a, 21b) correspondants dans les branches de C (19a, 19b) des éléments de retenue (5).

7. Porte-charge arrière (1) selon l'une quelconque des revendications précédentes, **caractérisé en ce que** l'élément d'engagement (23) est couplé de manière fixe en rotation à l'unité d'éclairage arrière (16) respective.

8. Porte-charge arrière (1) selon l'une quelconque des revendications précédentes, **caractérisé en ce que** l'élément d'engagement (23) est disposé dans un évidement (24) de l'unité d'éclairage arrière (16), ledit évidement (24) étant ouvert vers l'élément de maintien (5) correspondant,
dans lequel, en particulier, les éléments de maintien (5) ont une forme de base en C avec des branches de C (19a, 19b) dirigées vers l'extérieur et l'évidement (24) est ouvert vers une branche de C supérieure (19a) de l'élément de maintien (5).

9. Porte-charge arrière (1) selon la revendication 8, **caractérisé en ce qu'**une rainure de guidage (25) ouverte vers l'élément de maintien (5) correspondant et s'étendant de manière annulaire autour de l'axe de pivotement (X1, X2) est formée dans l'évidement (24), dans laquelle rainure de guidage (25) s'engage une saillie de guidage (26) correspondante de l'élément d'engagement (23).

10. Porte-charge arrière (1) selon l'une quelconque des revendications précédentes, **caractérisé en ce que** l'élément d'engagement (23) présente un contour d'engagement dans une face frontale tournée vers l'élément de maintien (5) correspondant, lequel contour d'engagement est ou peut être amené en engagement positif avec un contre-contour correspondant sur l'élément de maintien (5) dans sa position de verrouillage,
dans lequel, en particulier, le contour d'engagement comprend deux rainures d'engagement (29) qui s'étendent de manière rectiligne et radiale par rapport à l'axe de pivotement (X1, X2) et sont de préférence opposées l'une à l'autre par rapport à l'axe de pivotement (X1, X2),
dans lequel, de préférence, les rainures d'engagement (29) ont une section transversale rectangulaire et ont - radialement vers l'extérieur à partir de l'axe de pivotement (X1, X2) - une profondeur de rainure qui augmente, en particulier une profondeur de rainure qui augmente linéairement.

11. Porte-charge arrière (1) selon l'une quelconque des revendications 10, **caractérisé en ce que** le contre-contour correspondant formé sur l'élément de maintien (5) a une forme complémentaire au contour d'engagement.

12. Porte-charge arrière (1) selon l'une quelconque des revendications 8 à 11, **caractérisé en ce que** l'élément d'engagement (23) est précontraint en direction de sa position de verrouillage.

13. Porte-charge arrière (1) selon la revendication 12 et la revendication 9, **caractérisé en ce qu**'un élément de ressort, en particulier un ressort de compression hélicoïdal (31), est disposé dans la rainure de guidage (25) de l'unité d'éclairage arrière (16), ledit élément de ressort s'appuyant contre le fond de la rainure de guidage (25) et la saillie de guidage (26) de l'élément d'engagement (23).

14. Porte-charge arrière (1) selon l'une quelconque des revendications 4 ou 5, **caractérisé en ce que** les éléments d'engagement (23) présentent une ouverture centrale traversante (32) qui est traversée par un axe de charnière (20, 20b).

15. Porte-charge arrière (1) selon l'une quelconque des revendications précédentes, **caractérisé en ce que** le mécanisme de verrouillage comprend en outre un élément d'actionnement qui est mobile et interagit avec l'élément d'engagement (23) de telle sorte que l'élément d'actionnement est mobile entre une position d'arrêt, dans laquelle l'élément d'engagement (23) peut se déplacer dans sa position de verrouillage, et une position d'actionnement, dans laquelle l'élément d'engagement (23) est dans sa position de libération,
dans lequel, en particulier, l'élément d'actionnement est disposé de manière mobile sur l'élément de maintien (5) correspondant, les éléments de maintien (5) ayant de préférence une forme de base en C avec des branches de C (19a, 19b) dirigées vers l'extérieur et l'élément d'actionnement étant de préférence disposé sur une branches de C supérieure (19a) de l'élément de maintien (5), et/ou
dans lequel, en particulier, l'élément d'actionnement est conçu comme un bouton-poussoir (33) et/ou
l'élément d'actionnement est relié de manière axialement fixe à un axe de charnière (20a) et/ou
l'élément d'actionnement présente une rainure de palier (34) annulaire, formée concentriquement à l'axe de pivotement (X1, X2), qui est ouverte vers l'unite d'éclairage arrière (16) et dans laquelle s'engage une saillie de palier (35) correspondante de l'élément de maintien (5) et/ou
l'élément d'actionnement comprend une surface de contact (36) tournée vers l'unite d'éclairage arrière (16), laquelle surface de contact (36) repose à plat contre l'élément d'engagement (23) ou peut être amenée en contact avec l'élément d'engagement (23).

16. Porte-charge arrière (1) selon l'une quelconque des revendications précédentes, **caractérisé en ce que** le corps de base (2) comprend un élément porteur transversal (6) qui relie les deux éléments de maintien (5) l'un à l'autre,
dans lequel, en particulier, l'élément porteur transversal (6) porte un support de plaque d'immatriculation (7),
dans lequel, de préférence, les unités d'éclairage arrière (16) sont disposées dans leur position de transport derrière le support de plaque d'immatriculation (7), les unités d'éclairage arrière (16), de manière particulièrement préférée, ne se chevauchant pas.

17. Porte-charge arrière (1) selon la revendication 16, **caractérisé en ce qu'**une poignée est disposée sur l'élément porteur transversal (6) afin de pouvoir transporter le porte-charge arrière manuellement, et/ou **en ce qu'**un repose-pied (8) est disposé sur l'élément porteur transversal afin de pouvoir basculer le porte-charge arrière par rapport à un attelage de remorque côté véhicule.

18. Porte-charge arrière (1) selon l'une quelconque des revendications précédentes, **caractérisé en ce que** la position d'utilisation et la position de transport des unités d'éclairage arrière (16) sont décalées l'une par rapport à l'autre d'un angle de pivotement d'au moins 160°, en particulier d'au moins 170°, de préférence de 180°, et/ou **en ce que** le corps de base (2) est disposé de manière à pouvoir pivoter par rapport à un attelage de remorque côté véhicule.
**en ce que** le corps de base (2) est formé d'une seule pièce ou se compose de plusieurs parties qui sont reliées entre elles par complémentarité de forme et/ou de force, notamment par vissage, et/ou
**en ce qu'**au moins une section partielle du corps de base (2) est réalisée sous la forme d'une construction soudée et comprend en particulier plusieurs profilés soudés entre eux, et/ou
**en ce que** le porte-charge arrière comprend en outre des moyens d'alimentation en énergie pour alimenter les unités d'éclairage arrière (16) en énergie électrique,
dans lequel, en particulier, le moyen d'alimentation électrique comprend un connecteur (37) destiné à être fixé à une prise de courant côté véhicule,
dans lequel, de préférence, les moyens d'alimentation en énergie comprennent des câbles d'alimentation (38), qui mènent du connecteur (37) aux deux unités d'éclairage arrière (16),
dans lequel, de manière particulièrement préférée, les câbles électriques sont fixés au corps de base (2) par sections et/ou les câbles (38) s'étendent librement par sections, en particulier dans la section adjacente aux unités d'éclairage arrière (16), et/ou
**en ce que** le porte-charge arrière (1) est conçu comme un porte-vélo,
dans lequel, en particulier, il comprend au moins une partie de support, en particulier deux ou trois parties de support disposées de manière décalée les unes par rapport aux autres dans la direction longitudinale (L), pour recevoir des roues de bicyclettes, dans lequel la au moins une partie de support s'étend de préférence au moins sensiblement dans la direction transversale (T),
dans lequel, de préférence, des moyens de serrage pour serrer les roues de bicyclettes sont fixés à chaque partie de support afin de fixer les roues au support.
